(19) Europäisches Patentamt
European Patent Office
Office européen des brevets

(11) **EP 2 156 499 B1**

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(51) Int Cl.:
*H01M 8/12* (2006.01)   *C23C 4/10* (2006.01)
*C23C 4/12* (2006.01)   *C23C 4/06* (2006.01)

(21) Anmeldenummer: **08759666.4**

(22) Anmeldetag: **16.05.2008**

(86) Internationale Anmeldenummer:
**PCT/EP2008/056020**

(87) Internationale Veröffentlichungsnummer:
**WO 2008/145541 (04.12.2008 Gazette 2008/49)**

(54) **VERFAHREN ZUR HERSTELLUNG EINER GASDICHTEN FESTELEKTROLYTSCHICHT UND FESTELEKTROLYTSCHICHT**

METHOD FOR PRODUCING A GAS-TIGHT SOLID ELECTROLYTE LAYER AND SOLID ELECTROLYTE LAYER

PROCÉDÉ DE RÉALISATION D'UNE COUCHE D'ÉLECTROLYTE SOLIDE ÉTANCHE AUX GAZ ET COUCHE D'ÉLECTROLYTE SOLIDE CORRESPONDANTE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.05.2007 DE 102007026233**

(43) Veröffentlichungstag der Anmeldung:
**24.02.2010 Patentblatt 2010/08**

(73) Patentinhaber: **Deutsches Zentrum für Luft- und Raumfahrt e. V.**
**51147 Köln (DE)**

(72) Erfinder:
• **HENNE, Rudolf**
  **71034 Böblingen (DE)**
• **ARNOLD, Johannes**
  **75179 Pforzheim (DE)**

(74) Vertreter: **Regelmann, Thomas**
**HOEGER, STELLRECHT & PARTNER**
**Patentanwälte**
**Uhlandstrasse 14 c**
**70182 Stuttgart (DE)**

(56) Entgegenhaltungen:
**EP-A- 1 253 213        WO-A-02/19455**
**DE-A1-102004 054 982    US-A1- 2003 175 439**

**Beschreibung**

Die Erfindung betrifft ein Verfahren zur Herstellung einer gasdichten Festelektrolytschicht.

Aus der DE 10 2004 054 982 A1 ist ein Verfahren zur Herstellung einer gasdichten Festelektrolytschicht bekannt, welches die Schritte umfasst, dass eine ungesinterte oder bei Temperaturen unterhalb 1150°C vorgesinterte, auf einem Substrat aufgebrachte Elektrolytschicht mit einem Zirkonium aufweisenden Fluid infiltriert wird und die infiltrierte Elektrolytschicht bei einer Temperatur unterhalb von 1400°C gesintert wird.

Aus der DE 10 2005 045 053 A1 ist ein Verfahren zum Herstellen einer elektrisch isolierenden Dichtungsanordnung für einen Brennstoffzellenstapel, der mehrere Brennstoffzelleneinheiten umfasst, welche längs einer Stapelrichtung aufeinanderfolgen, bekannt, welches die Verfahrensschritte Erzeugen einer Keramik-Metall-Schicht aus einer Mischung eines Keramikmaterials und eines Metallmaterials und/oder eines Metallpräkursors und zumindest teilweise Umwandlung des Metalls der Keramik-Metall-Schicht in eine elektrisch nicht leitende Metallverbindung zur Erzeugung einer nicht leitenden Grenzschicht umfasst.

Aus der DE 103 02 122 A1 ist ein Verfahren zum Herstellen eines Dichtungsaufbaus für eine Brennstoffzelle und/oder einen Elektrolyser bekannt, bei dem eine Isolierschicht des Dichtungsaufbaus mittels eines Sprühverfahrens auf vorbestimmte Dichtungsbereiche von Separatorplatten einer Einzelbrennstoffzelle aufgetragen wird.

Aus der DE 11 2006 000 220 T5 ist ein Verfahren zur Herstellung einer Zelle für Festoxid-Brennstoffzellen bekannt, bei dem eine poröse Elektrolytschicht zum Erhalt eines Elektrolytsubstrats ausgebildet wird.

Die Patentanmeldung US 2003/175439 offenbart ein Verfahren zur Herstellung einer Festelektrolytschicht für eine Hochtemperatur-Brennstoffzelle bei dem eine Mischung aus einem Metalloxid und einem Metall auf ein poröses Substrat aufgebracht wird und anschließend in einer reduzierenden und dann in einer oxidierenden Atmosphäre behandelt wird. Dabei findet eine Oxidation des Metalls statt, die den Effekt hat, dass sich das Material ausdehnt. Das Metall liegt in Form von Partikeln vor.

Die Patentanmeldung EP-A-1 253 213 beschreibt ein Verfahren zur Herstellung einer keramischen Schicht, z.B. einer Elektrolytschicht einer Hochtemperaturbrennstoffzelle, bei der in einem ersten Schritt eine keramisches Beschichtungsmaterial auf ein Substrat aufgebracht wird, beispielsweise durch thermisches Spritzen. In einem zweiten Schritt wird die aufgebrachte Rohschicht mit einer Lösung eines Metallsalzes imprägniert und übereine Wärmebehandlung das Metallsalz in ein Oxid überführt, so dass die Kapillarräume der Rohschicht verspiegelt werden.

Die Patentanmeldung WO 02/19455 gibt ein Verfahren zur Herstellung einer Elektrolytschicht für eine Hochtemperaturbrennstoffzelle mittels Plasmaspritzen auf eine Elektrode an.

Der Erfindung liegt die Aufgabe zugrunde, ein Verfahren der eingangs genannten Art bereitzustellen, mit welchem sich bei einfacher Durchführbarkeit eine Festelektrolytschicht mit hoher Gasdichtigkeit herstellen lässt.

Diese Aufgabe wird bei dem eingangs genannten Verfahren erfindungsgemäß dadurch gelöst, dass eine Schicht aus einem metalloxidischen Material hergestellt wird und bei der Schichtherstellung Metallpartikel in die Schicht eingebaut werden, wobei die Metallpartikel oxidierbar sind und nachträglich oxidiert werden, wobei die Festelektrolytschicht über thermisches Spritzen hergestellt wird.

Bei der Herstellung der Schicht aus metalloxidischem Material insbesondere über Pulverpartikel können Störstellen wie Poren und Mikrorisse entstehen, die eine Wasserstoffdiffusion zwischen der Anode und der Kathode ermöglichen.

Je gasdichter die Festelektrolytschicht ist, desto höher ist die offene Zellspannung (OCV), die erreichbar ist. Eine hohe offene Zellspannung wiederum bedeutet einen hohen elektrischen Wirkungsgrad der Hochtemperatur-Brennstoffzelle.

Bei der erfindungsgemäßen Lösung werden Metallpartikel eingebaut, die später, d. h. nach dem Einbringen, (beispielsweise im Betrieb der Brennstoffzelle) oxidiert werden. Dies führt zu einer Nachverdichtung der Festelektrolytschicht, was deren Gasdurchlässigkeit erniedrigt. Es lässt sich dadurch die Wasserstoffdiffusion zwischen Anode und Kathode ausreichend unterbinden.

Weiterhin weisen oxidierte Partikel in der Regel ein größeres Volumen auf als entsprechende Metallpartikel, aus denen sie entstanden sind, so dass sich dadurch Störstellen wie Poren und Mikrorisse auf effektive Weise schließen lassen.

Bei geeigneten Metallpartikeln ist es auch möglich, dass durch diese die Leitfähigkeit für Sauerstoffionen in der Festelektrolytschicht erhöht wird. Metallpartikel können beim Auftreffen auf ein Substrat abflachen und "Splats" bilden, wodurch es zu einer Brückenbildung mit der erwähnten erhöhten Leitfähigkeit für Sauerstoffionen kommen kann.

Durch geeignete Wahl des Materials der Metallpartikel lässt sich erreichen, dass das Einbringen der Metallpartikel keine negativen Auswirkungen auf die Funktionalität der Hochtemperatur-Brennstoffzelle hat.

Durch die erfindungsgemäße Lösung ist es möglich, dünne Festelektrolytschichten mit hoher Gasdichtigkeit herzustellen. Durch die Möglichkeit der dünnen Herstellung erhält man bei geringem Materialeinsatz (und damit reduzierter Herstellungszeit) einen hohen elektrochemischen Wirkungsgrad, da sich der elektrische Widerstand der Hochtemperatur-Brennstoffzelle klein halten lässt. (Grundsätzlich ist der elektrische Widerstand umso höher, je höher die Schichtdicke der Festelektrolytschicht ist. Je höher der elektrische Widerstand, desto geringer ist der Wirkungsgrad der Hochtemperatur-Brennstoffzelle.)

Durch das erfindungsgemäße Verfahren lässt sich eine dünne Festelektrolytschicht beispielsweise in der Größenordnung von einigen 10 μm herstellen, wobei ein zusätzlicher Sinterschritt nicht notwendig ist.

Insbesondere ist die Festelektrolytschicht leitfähig für Sauerstoffionen. Dadurch ist es möglich, die Kathode und Anode über die Festelektrolytschicht gasdicht voneinander zu trennen und bezüglich Elektronenleitung elektrisch voneinander zu trennen, wobei eine Sauerstoffionendiffusion durch die Festelektrolytschicht zum Schließen des elektrischen Kreises möglich ist.

Aus den genannten Gründen ist es vorteilhaft, wenn die Festelektrolytschicht eine Isolationsschicht für Elektronenleitung ist.

Günstigerweise sind die Metallpartikel so gewählt, dass sie unter exothermer Reaktion oxidierbar sind. Dadurch ist eine Oxidation zur Schließung von Poren, Mikrorissen und dergleichen in einer Festelektrolytschicht auf effektive Weise möglich.

Beispielsweise erfolgt die Oxidation der Metallpartikel durch Betrieb der Hochtemperatur-Brennstoffzelle. Beim Betrieb der Hochtemperatur-Brennstoffzelle diffundieren Sauerstoffionen durch die Festelektrolytschicht. Diese Sauerstoffionen können zu einer Oxidation der eingelagerten Metallpartikel führen. Diese Reaktionen sind irreversibel und es erfolgt dadurch eine Nachverdichtung der Festelektrolytschicht unter Erniedrigung deren Gasdurchlässigkeit. Es sind dann keine besonderen Schritte zur Oxidierung der Metallpartikel in der Festelektrolytschicht notwendig. Nach Betrieb der Hochtemperatur-Brennstoffzelle über einen bestimmten Zeitraum weist die Festelektrolytschicht keine eingelagerten Metallpartikel mehr auf; diese sind in elektrisch nicht leitende Metalloxide umgewandelt und dabei sind Poren und Risse und dergleichen geschlossen worden.

Es hat sich als günstig erwiesen, wenn die Metallpartikel aus einem Metall der dritten oder vierten Nebengruppe sind. Solche Metallpartikel können beispielsweise beim Plasmaspritzen beim Auftreffen auf ein Substrat abflachen und sogenannte "Splats" bilden. Es kommt dadurch zu einer Brückenbildung, welche eine erhöhte Leitfähigkeit für Sauerstoffionen zur Folge hat.

Beispielsweise sind die Metallpartikel aus Sc, Y, La, Ti, Zr oder Hf. Es können Metallpartikel aus verschiedenen Metallen gleichzeitig eingesetzt werden.

Bei einem Ausführungsbeispiel sind die Metallpartikel aus dem gleichen Material wie das chemische Element in dem metalloxidischen Material für die

Schichtherstellung. Es ist aber auch möglich, dass die Metallpartikel aus einem anderen Material sind wie das chemische Element in dem metalloxidischen Material.

Es hat sich als günstig erwiesen, wenn zum Einbringen der Metallpartikel ein Metallpräkursor verwendet wird. Es lässt sich ein Metallpräkursor einsetzen, welcher reaktionsträger ist als das entsprechende Metall. Dadurch lässt es sich gewährleisten, dass tatsächlich Metallpartikel in die Schicht eingebracht werden, wobei die Metallpartikel das metallische Material aufweisen und nicht ein während der Herstellung "im Flug" erzeugtes metalloxidisches Material. Der Metallpräkursor ist dabei geeignet, wenn er vor dem Aufbringen auf das Substrat zerfällt.

Beispielsweise wird als Metallpräkursor Metallhydrid verwendet. Durch Reduktion des Hydrids und Ausbildung des Metalls können Metallpartikel in die Schicht eingebracht werden. In der Regel lässt sich so Metall in eine Spritzschicht auf kostengünstigere und sichere Weise einbringen, als wenn beispielsweise direkt Metallpartikel gespritzt werden. Beispielsweise weisen Zirkonpulver und Titanpulver eine hohe Entzündungsfreudigkeit auf, so dass diese Materialien schwierig handzuhaben sind im Gegensatz zu entsprechenden Hydridpulvern.

Insbesondere liegt der Gewichtsanteil der Metallpartikel im Bereich von 1 % bis 10 % zu dem Restmaterial der Festelektrolytschicht. Der Anteil der Metallpartikel beträgt also in Gewichtsprozent höchstens 1 % bis 10 % des Gesamtgewichts der hergestellten Festelektrolytschicht.

Es ist dabei günstig, wenn die Metallpartikel definiert verteilt eingebracht werden. Dies lässt sich durch entsprechende Verfahrensdurchführung erreichen. Beispielsweise werden Metallpartikel homogen verteilt eingebracht. Dadurch lässt sich gleichmäßig über das gesamte Volumen der Festelektrolytschicht durch Oxidation der Metallpartikel ein Schließen von Poren, Mikrorissen und dergleichen erreichen und so wiederum lässt sich eine Gasdichtigkeit mit hohem Dichtigkeitsgrad erreichen. Es kann auch eine gradierte Verteilung vorgesehen sein. Dadurch lässt sich beispielsweise eine höhere Konzentration an Metallpartikeln in Bereichen einstellen, an welchen eine Lötverbindung hergestellt werden soll.

Aufgrund der beim thermischen Spritzen wie beispielsweise Flammspritzen oder Plasmaspritzen erreichbaren kurzen Wechselwirkungszeit zwischen Spritzgut und thermischem Strahl kommt es zu relativ geringen thermischen Belastungen des Spritzguts und des Substrats. Innerhalb kurzer Zeit (in der Größenordnung von wenigen Minuten in Abhängigkeit von der zu beschichtenden Fläche) lässt sich die entsprechende Festelektrolytschicht herstellen. Beim thermischen Spritzen wird Spritzgut in Pulverform in einen Strahl geblasen, dort beschleunigt und aufgeschmolzen. Auf dem Substrat überlagern sich die erstarrenden Tröpfchen und es kommt zur Ausbildung einer geschlossenen Schicht und insbesondere keramischen Schicht, ohne dass eine nachträgliche Sinterung notwendig ist.

Insbesondere werden Metallpartikel und/oder Metallpräkursorpartikel und Partikel aus metalloxidischem Material auf ein Substrat gespritzt. Die Metallpartikel und/oder Metallpräkursorpartikel werden in einen thermischen Strahl, d. h. einen Strahl mit einer Temperatur oberhalb der Schmelztemperatur des aufzubringenden Materials, geblasen. Bei entsprechender Einblaseinstellung lässt sich dadurch eine homogene Verteilung von Metallpartikeln in der hergestellten Festelektrolytschicht erreichen. Ferner lässt sich durch entsprechende Einstellung der Einblasparameter und insbesondere des Materialdurchsatzes eine definierte Konzentration an Metallpartikeln einstellen. Bei Bedarf kann auch eine definierte Gradierung der Verteilung der Metallpartikel eingestellt werden.

Es ist vorgesehen, dass die Parameter so eingestellt werden und/oder die Metallpräkursorpartikel so gewählt werden, dass aus den Metallpräkursorpartikeln im Flug Metallpartikel gebildet werden. Wenn beispielsweise Metallpräkursorpartikel aus Metallhydrid eingesetzt werden, dann sollen diese im Fluge unter Ausbildung des Metalls zerfallen, d. h. das Hydrid wird reduziert und es bildet sich das metallische Material.

Es hat sich als günstig erwiesen, wenn die Festelektrolytschicht über Plasmaspritzen hergestellt wird. In einen Plasmastrahl werden die entsprechenden Ausgangsmaterialien eingeblasen, dort beschleunigt und geschmolzen. Es lässt sich dadurch ohne einen zusätzlichen Sinter-Prozessschritt eine dichte Festelektrolytschicht aufbauen. Es besteht grundsätzlich die Möglichkeit, dass Störstellen durch ungeschmolzene oder nur teilweise geschmolzene Partikel gebildet werden. Bei der erfindungsgemäßen Lösung mit dem Einbau von Metallpartikeln in die Festelektrolytschicht, die später oxidieren können, lassen sich solche Störstellen ohne aufwendige Nachbearbeitung "eliminieren".

Insbesondere wird die Festelektrolytschicht über Vakuumplasmaspritzen hergestellt. Es lässt sich dadurch vermeiden, dass bei dem Aufbringen von Metallpartikeln oder Metallpräkursorpartikeln aufgrund der Reaktion des Metalls mit Luftsauerstoff Metalloxide gebildet werden. Dies garantiert, dass Metallpartikel (und nicht Metalloxide) in die Festelektrolytschicht für die spätere Oxidation eingebaut werden.

Bei einem Ausführungsbeispiel umfasst die Festelektrolytschicht Zirkonoxid. Dieses kann beispielsweise Yttrium-stabilisiert sein.

Es ist dann günstig, wenn Zirkonhydrid zur Bildung der Metallpartikel verwendet wird.

Insbesondere ist die Festelektrolytschicht eine keramische Schicht. Diese keramische Schicht wird dabei durch thermisches Spritzen hergestellt, ohne dass ein nachträglicher Sinterschritt durchgeführt wird.

Die Festelektrolytschicht weist zwei definierte Zustände auf. Nach der Herstellung sind in ihr Metallpartikel eingelagert, die oxidierbar sind.

Nach der Oxidation, welche beispielsweise über Betrieb der Hochtemperatur-Brennstoffzelle durchgeführt wird, sind im Wesentlichen keine Metallpartikel mehr vorhanden; diese sind oxidiert. Dabei hat sich die Mikrostruktur verändert. Poren, Mikrorisse und dergleichen wurden durch die Metalloxidbildung geschlossen. Es ist eine Nachverdichtung erfolgt, welche zu einer verringerten Gasdurchlässigkeit geführt hat.

Die nachfolgende Beschreibung bevorzugter Ausführungsformen dient im Zusammenhang mit den Zeichnungen der näheren Erläuterung der Erfindung. Es zeigen:

Figur 1     eine schematische Teilschnittdarstellung eines Ausführungs- beispiels einer Hochtemperatur-Brennstoffzelle; und

Figur 2     eine schematische Darstellung einer Vorrichtung zur Her- stellung einer gasdichten Festelektrolytschicht.

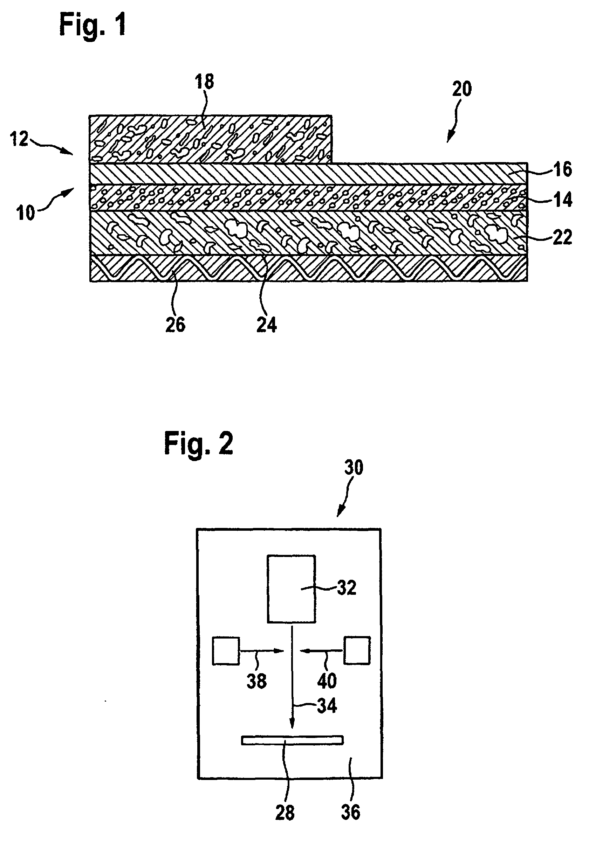

Ein Ausführungsbeispiel einer Hochtemperatur-Brennstoffzelle ist eine oxidkeramische Brennstoffzelle (SOFC - solid oxide fuel cell). Ein Hochtemperatur-Brennstoffzellenmodul, welches in Figur 1 in einer Teilschnittdarstellung schematisch gezeigt und dort mit 10 bezeichnet ist, umfasst eine elektrochemische Funktionseinrichtung 12 mit einer Anode 14, einem Festelektrolyten 16 und einer Kathode 18. Die Anode 14, der Festelektrolyt 16 und die Kathode 18 bilden eine Anoden-Elektrolyt-Kathoden-Einheit 20.

Die Anode 14 ist auf einem Anodenträger 22 angeordnet. Der Anodenträger 22 ist elektrisch leitend (elektronenleitend) und aus einem porösen Material hergestellt, so dass der gasförmige Brennstoff durch den Anodenträger 22 hindurch zu der Anode 14 gelangen kann. Der Anodenträger 22 ist ein mechanischer Träger für die Anode 14, über welchen eine elektrische Kontaktierung der Anode 14 beispielsweise mit einem Gehäuse (in der Figur nicht gezeigt) ermöglicht wird.

An dem Anodenträger 22 kann an einer Seite 24, welche der Seite gegenüberliegt, an welcher die Anode 14 angeordnet ist, eine elektrische Kontakteinrichtung 26 angeordnet sein. Diese ist insbesondere aus einem metallischen Material hergestellt. Die elektrische Kontakteinrichtung 26 steht in mechanischem und elektrischem Kontakt mit einem Gehäuse. Sie sorgt dadurch für die elektrische Kontaktierung der Anode 14 mit dem Gehäuse. Die elektrische Kontakteinrichtung 26 ist mit dem Anodenträger 22 und dem Gehäuse beispielsweise verlötet oder verschweißt. Über die elektrische Kontakteinrichtung 26 stützt sich der Anodenträger und damit die elektrische Funktionseinrichtung 12 an dem Gehäuse ab.

Die elektrische Kontakteinrichtung 26 ist gasdurchlässig ausgebildet, so dass Brennstoffgas zu der Anode 14 gelangen kann. Die elektrische Kontakteinrichtung 26 ist beispielsweise als Netz oder Gewebe oder Gewirke ausgebildet.

Die Anode ist beispielsweise zum Teil aus einem oxidkeramischen Material hergestellt und weist einen anodischen Katalysator auf; beispielsweise ist die Anode 14 aus Nickel-Zirkonoxid hergestellt.

Die Anode 14 ist als Schicht hergestellt, welche eine Dicke im Größenbereich von wenigen 10 $\mu$m aufweist.

Der Festelektrolyt 16 ist auf der Anode 14 ausgebildet und insbesondere als Schicht hergestellt. Eine typische Schichtdicke des Festelektrolyten liegt in der Größenordnung von einigen 10 $\mu$m. Mit zunehmender Schichtdicke nimmt der elektrische Widerstand zu und damit der elektrische Wirkungsgrad der Hochtemperatur-Brennstoffzelle ab.

Der Festelektrolyt 16 ist gasdicht. Er bildet einen Isolator für Elektronenleitung und ist Sauerstoffionen-leitend.

Der Festelektrolyt 16 ist bei einem Ausführungsbeispiel aus Yttrium-stabilisierten Zirkonoxid hergestellt. Weitere Materialbeispiele sind Scandiumoxiddotiertes Zirkonoxid oder Gadolinium-dotiertes Ceroxid. Auf dem Festelektrolyten 16 ist die Kathode 18 angeordnet. Sie ist beispielsweise aus einem oxidkeramischen Material hergestellt. Beispielsweise werden zur Herstellung Mischoxide wie Lanthan-Strontium-Manganat eingesetzt. Die Kathode 18 ist insbesondere als Schicht ausgebildet, welche eine Schichtdicke in der Größenordnung von wenigen 10 $\mu$m aufweist.

Bei einer Hochtemperatur-Brennstoffzelle 10 findet an der Kathode 18 folgende Teilreaktion statt:

$$\frac{1}{2} O_2 + 2e^- \rightarrow O^{2-}$$

Der Anode 14 wird Brennstoff zugeführt. Es findet folgende Teilreaktion statt:

$$H_2 + O^{2-} \rightarrow H_2O + 2e^-$$

Die entsprechende Hochtemperatur-Brennstoffzelle 10 wird bei einer Temperatur im Bereich von ca. 650°C bis 1000°C betrieben.

Der Brennstoff, welcher Wasserstoffgas ist oder enthält, kann beispielsweise über einen Reformer geliefert werden.

Der Festelektrolyt 16 wird wie folgt hergestellt:

Der Festelektrolyt 16 wird als Beschichtung auf einem Substrat, welches durch die Anode 14 auf dem Anodenträger 22 gebildet ist, hergestellt. Die Schicht wird dadurch hergestellt, dass sie durch metalloxidische Partikel (Pulverpartikel) mittels thermischem Spritzen (Sprühen) aufgebracht wird. Beim thermischen Spritzen werden die Partikel geschmolzen und es lässt sich die Festelektrolytschicht 16 als keramische Schicht herstellen.

Erfindungsgemäß werden während des Aufbaus der Festelektrolytschicht 16 durch die metalloxidischen Partikel Metallpartikel in die Schicht eingebracht. Diese Metallpartikel dienen dazu, Stör-/Leerstellen durch ungeschmolzene oder nur teilweise geschmolzene metalloxidische Partikel zu vermeiden, indem diese Stör-/Leerstellen "geschlossen" werden. Die Metallpartikel sind so gewählt, dass sie oxidierbar sind (zu einem metalloxidischen Material), insbesondere unter exothermer Reaktion.

Beispiele für Metallmaterialien für die Metallpartikel sind Metalle der dritten und vierten Nebengruppe wie Sc, Y, La, Ti, Zr und Hf. Es ist dabei möglich, dass metallische Materialien für die Metallpartikel verwendet werden, die ein Metalloxid ergeben, aus dem der Festelektrolyt 16 aufgebaut ist. Beispielsweise wird für einen Festelektrolyten aus Yttrium-stabilisiertem Zirkonoxid als Material für die Metallpartikel Yttrium und/oder Zirkon eingesetzt. Es ist auch möglich, dass Metallmaterialien eingesetzt werden, welche unter Oxidation Metalloxide bilden, die verschieden sind von dem oder den Metalloxiden, aus denen der restliche Festelektrolyt 16 aufgebaut ist.

Metallpartikel (auch solche aus Metallen der dritten und vierten Nebengruppe) haben die vorteilhafte Eigenschaft, dass sie beim Auftreffen auf ein Substrat zum Schichtaufbau abflachen und sogenannte "Splats" bilden. Dadurch kommt es zu einer Brückenbildung, welche eine erhöhte Leitfähigkeit für Sauerstoffionen in dem hergestellten Festelektrolyten 16 zur Folge hat.

Generell wird das Material für die Metallpartikel so gewählt, dass in der hergestellten Hochtemperatur-Brennstoffzelle keine negativen Auswirkungen auf deren Funktionalität und insbesondere Ionenleitfähigkeit und elektrische Leitfähigkeit vorliegen.

Die Oxidation der Metallpartikel, welche in einem hergestellten Festelektrolyten 16 eingeschlossen sind, erfolgt beispielsweise durch Betrieb der hergestellten Hochtemperatur-Brennstoffzelle 10. Im Betrieb diffundieren Sauerstoffionen durch den Festelektrolyten 16 hindurch, welche die Oxidation der Metallpartikel verursachen. Dadurch erhält man eine Nachverdichtung der Festelektrolytschicht. Dies wird noch dadurch verstärkt, dass oxidierte Metallpartikel im Allgemeinen ein größeres Volumen einnehmen als Metallpartikel aus dem reinen Metall.

Bei einem Ausführungsbeispiel, welches schematisch in Figur 2 angedeutet ist, wird der Festelektrolyt 16 auf einem Substrat 28 durch Plasmaspritzen mittels einer Plasmaspritzvorrichtung 30 hergestellt. Ein Plasmabrenner 32 erzeugt einen Plasmastrahl (Jet) 34. Beispielsweise wird ein Vakuum-Plasmaspritzverfahren durchgeführt (VPS), bei dem der Druck reduziert ist. Entsprechend ist das Substrat 28 in einem Raum 36 angeordnet, welcher auf Unterdruck gegenüber der Atmosphäre liegt.

In den Plasmastrahl 34 werden Pulverpartikel verschiedener Körnung des metalloxidischen Materials eingeblasen, welches das Hauptmaterial für den Festelektrolyten 16 ist. Dies ist in Figur 2 durch das Bezugszeichen 38 angedeutet. Die Pulverpartikel werden durch den Plasmastrahl 34 beschleunigt und aufgeschmolzen. Auf dem Substrat 28 erstarren die aufgeschmolzenen Tröpfchen; im Idealfall sind die Tröpfchen pfannkuchenförmig erstarrend. Es kommt zur Ausbildung einer geschlossenen Schicht, welche den Festelektrolyten 16 bildet. Nicht oder nicht vollständig geschmolzene Pulverpartikel werden dabei in die Festelektrolytschicht 16 eingelagert und können zu Poren und Mikrorissen führen. Poren und Mikrorisse können auch bei ungleichmäßiger oder zu schneller Erstarrung der Schicht entstehen. Zwischen Splats können auch Grenzschichten bzw. Spalte vorliegen, die grundsätzlich die Festigkeit und die Ionenleitfähigkeit negativ beeinflussen können. Ferner verschlechtern sie die Gasdichtigkeit. Durch die erfindungsgemäße Lösung werden die Spalte durch Brückenbildung geschlossen, was auch zur Erhöhung der Ionenleitfähigkeit führt.

Durch thermische Spritzverfahren und insbesondere durch Plasmaspritzen lassen sich dünne Schichten herstellen.

Die Metallpartikel oder Metallpräkursorpartikel werden in den Plasmastrahl 34 gemeinsam mit den metalloxidischen Partikeln eingeblasen. Das Einblasen der Metallpartikel bzw. Metallpräkursorpartikel ist in Figur 2 durch den Pfeil mit dem Bezugszeichen 40 angedeutet.

Als Metallpräkursorpartikel werden beispielsweise Partikel aus Metallhydrid verwendet. Metallhydride sind im Plasmastrahl 34 reaktionsträger als Metalle. Sie besitzen eine relativ niedrige Zersetzungstemperatur, welche im Plasmastrahl 34 überschritten wird. Dadurch kommt es zur Reduktion des Metallhydrids und zur Ausbildung des Metalls, d. h. aus den Metallpräkursorpartikel entstehen Metallpartikel. Diese werden dann auf dem Substrat 28 in die entstehende Schicht in Metallform eingebunden. Durch die Durchführung unter verringertem Druck wird die Wahrscheinlichkeit der Reaktion des Metalls mit Luftsauerstoff minimiert, so dass Metallpartikel aus reinem Metall einbringbar sind.

Bei einem konkreten Ausführungsbeispiel wird Zirkonhydrid in Partikelform gemeinsam mit Zirkonoxid-Partikeln eingeblasen. (Es ist grundsätzlich auch möglich, dass beispielsweise Zirkon-Metallpartikel direkt gespritzt werden; dieses Metallpartikelspritzen ist jedoch wegen der hohen Entzündungsfreudigkeit von Zirkonpulver gefährlicher und teurer als die Verwendung von Zirkonhydrid.)

Der Gewichtsanteil der Metallpartikel in dem hergestellten Festelektrolyten 16 vor der Oxidation der Metallpartikel liegt beispielsweise in der Größenordnung zwischen 1 % und 10 %. Es wird beim Einspritzen darauf geachtet, dass die Metallpartikel in der hergestellten Festelektrolytschicht 16 definiert verteilt sind. Beispielsweise wird eine homogene Verteilung eingestellt. Es können auch Anreicherungsbereiche erzeugt werden, wie beispielsweise an Lötbereichen. Die Einstellung einer gradierten Verteilung ist möglich.

Der Festelektrolyt 16 lässt sich als keramische Schicht herstellen, bei der Poren, Mikrorisse, Spalte und dergleichen durch Oxidation der Metallpartikel geschlossen werden. Man erhält dadurch eine Nachverdichtung des Festelektrolyten 16 und dessen Gasundurchlässigkeit wird erhöht. Dadurch lässt sich eine Wasserstoffdiffusion zwischen der Anode 14 und der Kathode 18 ausreichend unterbinden. Dadurch wiederum ist es möglich, den Festelektrolyten 16 relativ dünn herzustellen, wodurch man einen höheren Leistungsgrad der Hochtemperatur-Brennstoffzelle 10 erhält.

Es ist kein zusätzlicher Sinterschritt bei der Herstellung der Hochtemperatur-Brennstoffzelle 10 für den Festelektrolyten 16 notwendig. Durch das erfindungsgemäße Verfahren lassen sich die Störstellen in dem Festelektrolyten 16 reduzieren oder sogar vollständig vermeiden.

Die thermische Belastung des Substrats 28 während der Herstellung des Elektrolyten 16 ist relativ gering. Aufgrund der relativ kurzen Wechselwirkungszeit (von wenigen Millisekunden) zwischen Spritzgut und Plasma im Plasmastrahl 34 kommt es zu geringen thermischen Belastungen des Spritzguts und auch des Substrats 28, wenn der Plasmastrahl über das Substrat 28 mit entsprechender Geschwindigkeit verfahren wird.

Es ist ferner möglich, durch das Plasmaspritzen grobes Elektrolytmaterial mit Partikeln einer Partikelgröße von einigen 10 $\mu$m und gleichzeitig feine Hydridpartikel mit einem Durchmesser von kleiner als 10 $\mu$m zu verwenden. Insbesondere werden Hydridpartikel einer Größe zwischen 1 $\mu$m und 50 $\mu$m verspritzt. Als vorteilhaft hat sich eine Partikelgröße um 5 $\mu$m für die Hydridpartikel erwiesen.

**Patentansprüche**

1. Verfahren zur Herstellung einer gasdichten Festelektrolytschicht für eine Hochtemperatur-Brennstoffzelle, bei dem eine Schicht aus einem metalloxidischen Material hergestellt wird und bei der Schichtherstellung Metallpartikel in die Schicht eingebracht werden, wobei die Metallpartikel oxidierbar sind und nachträglich oxidiert werden, wobei die Festelektrolytschicht über thermisches Spritzen hergestellt wird.

2. Verfahren nach Anspruch 1, **dadurch gekennzeichnet, dass** die Festelektrolytschicht leitfähig für Sauerstoffionen ist.

3. Verfahren nach Anspruch 1 oder 2, **dadurch gekennzeichnet, dass** die Festelektrolytschicht eine Isolierschicht für Elektronenleitung ist.

4. Verfahren nach einem der vorangehenden Ansprüche, **dadurch gekennzeichnet, dass** die Metallpartikel unter exothermer Reaktion oxidierbar sind.

5. Verfahren nach einem der vorangehenden Ansprüche, **dadurch gekennzeichnet, dass** die Oxidation der Metallpartikel durch Betrieb der Hochtemperatur-Brennstoffzelle erfolgt.

6. Verfahren nach einem der vorangehenden Ansprüche, **dadurch gekennzeichnet, dass** die Metallpartikel aus einem Metall der dritten oder vierten Nebengruppe sind, und insbesondere dass die Metallpartikel aus Sc, Y, La, Ti, Zr oder Hf sind.

7. Verfahren nach einem der vorangehenden Ansprüche, **dadurch gekennzeichnet, dass** die Metallpartikel aus dem gleichen Material sind wie das Metall in dem metalloxidischen Material.

8. Verfahren nach einem der vorangehenden Ansprüche, **dadurch gekennzeichnet, dass** zum Einbringen der Metallpartikel ein Metallpräkursor verwendet wird, und insbesondere als Metallpräkursor Metallhydrid verwendet wird.

9. Verfahren nach einem der vorangehenden Ansprüche, **dadurch gekennzeichnet, dass** der Gewichtsanteil der Metallpartikel im Bereich von 1 % bis 10 % zu dem Restmaterial der Festelektrolytschicht liegt.

10. Verfahren nach einem der vorangehenden Ansprüche, **dadurch gekennzeichnet, dass** Metallpartikel und/oder Metallpräkursorpartikel und Partikel aus metalloxidischem Material auf ein Substrat gespritzt werden.

11. Verfahren nach einem der vorangehenden Ansprüche, **dadurch gekennzeichnet, dass** die Parameter so eingestellt werden und/oder die Metallpräkursorpartikel so gewählt werden, dass aus den Metallpräkursorpartikeln im Flug Metallpartikel gebildet werden.

12. Verfahren nach einem der vorangehenden Ansprüche, **dadurch gekennzeichnet, dass** die Festelektrolytschicht über Plasmaspritzen hergestellt wird.

13. Verfahren nach Anspruch 12, **dadurch gekennzeichnet, dass** die Festelektrolytschicht über Vakuumplasmaspritzen hergestellt wird.

14. Verfahren nach einem der vorangehenden Ansprüche, **dadurch gekennzeichnet, dass** die Festelektrolytschicht Zirkonoxid umfasst, und insbesondere dass Zirkonhydrid zur Bildung der Metallpartikel verwendet wird.

15. Verfahren nach einem der vorangehenden Ansprüche, **dadurch gekennzeichnet, dass** die Festelektrolytschicht eine keramische Schicht ist.

**Claims**

1. Method of producing a gas-tight solid electrolyte layer for a high-temperature fuel cell, wherein a layer is produced from a metal oxide material and metal particles are incorporated in the layer during production of the layer, wherein the metal particles are oxidizable and are subsequently oxidized, and wherein the solid electrolyte layer is produced by thermal spraying.

2. Method in accordance with claim 1, **characterized in that** the solid electrolyte layer is conductive for oxygen ions.

3. Method in accordance with claim 1 or 2, **characterized in that** the solid electrolyte layer is an insulating layer for electron conduction.

4. Method in accordance with any one of the preceding claims, **characterized in that** the metal particles are oxidizable in an exothermic reaction.

5. Method in accordance with any one of the preceding claims, **characterized in that** the oxidation of the metal particles takes place by way of operation of the high-temperature fuel cell.

6. Method in accordance with any one of the preceding claims, **characterized in that** the metal particles are made of a metal of the third or fourth subgroups, and, in particular, that the metal particles are made of Sc, Y, La, Ti, Zr or Hf.

7. Method in accordance with any one of the preceding claims, **characterized in that** the metal particles are made of the same material as the metal in the metal oxide material.

8. Method in accordance with any one of the preceding claims, **characterized in that** a metal precursor is used to incorporate the metal particles, and, in particular, that metal hydride is used as metal precursor.

9. Method in accordance with any one of the preceding claims, **characterized in that** the weight proportion of the metal particles ranges from 1% to 10% in relation to the remaining material of the solid electrolyte layer.

10. Method in accordance with any one of the preceding claims, **characterized in that** metal particles and/or metal precursor particles and particles of metal oxide material are spayed onto a substrate.

11. Method in accordance with any one of the preceding claims, **characterized in that** the parameters are set such that and/or the metal precursor particles are selected such that metal particles are formed from the metal precursor particles in flight.

12. Method in accordance with any one of the preceding claims, **characterized in that** the solid electrolyte layer is produced by plasma spraying.

13. Method in accordance with claim 12, **characterized in that** the solid electrolyte layer is produced by vacuum plasma spraying.

14. Method in accordance with any one of the preceding claims, **characterized in that** the solid electrolyte layer comprises zirconia, and in particular, that zirconium hydride is used to form the metal particles.

15. Method in accordance with any one of the preceding claims, **characterized in that** the solid electrolyte layer is a ceramic layer.

**Revendications**

1. Procédé de production d'une couche d'électrolyte solide étanche aux gaz pour une pile à combustible à haute température, dans lequel une couche est produite à partir d'un matériau oxyde métallique et des particules métalliques sont introduites dans la couche lors de la production de la couche, où les particules métalliques sont oxydables et sont oxydées ultérieurement, où la couche d'électrolyte solide est produite par projection thermique.

2. Procédé selon la revendication 1 **caractérisé en ce que** la couche d'électrolyte solide est conductrice pour les ions oxygène.

3. Procédé selon la revendication 1 ou 2 **caractérisé en ce que** la couche d'électrolyte solide est une couche isolante pour la conduction des électrons.

4. Procédé selon l'une des revendications précédentes **caractérisé en ce que** les particules métalliques sont oxydables dans une réaction exothermique.

5. Procédé selon l'une des revendications précédentes **caractérisé en ce que** l'oxydation des particules métalliques a lieu par le fonctionnement de la pile à combustible à haute température.

6. Procédé selon l'une des revendications précédentes **caractérisé en ce que** les particules métalliques sont en un métal du troisième ou quatrième sous-groupe, et en particulier **en ce que** les particules métalliques sont en Sc, Y, La, Ti, Zr ou Hf.

7. Procédé selon l'une des revendications précédentes **caractérisé en ce que** les particules métalliques sont en le même matériau que le métal dans le matériau oxyde métallique.

8. Procédé selon l'une des revendications précédentes **caractérisé en ce qu'**un précurseur de métal est utilisé pour l'introduction des particules métalliques, et en particulier un hydrure métallique est utilisé comme précurseur de métal.

9. Procédé selon l'une des revendications précédentes **caractérisé en ce que** la fraction en poids des particules métalliques est située dans le domaine de 1 % à 10 % par rapport au matériau restant de la couche d'électrolyte solide.

10. Procédé selon l'une des revendications précédentes **caractérisé en ce que** des particules métalliques et/ou des particules de précurseur de métal et des particules en matériau oxyde métallique sont projetées sur un substrat.

11. Procédé selon l'une des revendications précédentes **caractérisé en ce que** les paramètres sont réglés de telle manière et/ou les particules de précurseur de métal sont choisies de telle manière que des particules métalliques sont formées en vol à partir des particules de précurseur de métal.

12. Procédé selon l'une des revendications précédentes **caractérisé en ce que** la couche d'électrolyte solide est produite par projection au plasma.

13. Procédé selon la revendication 12 **caractérisé en ce que** la couche d'électrolyte solide est produite par projection au plasma sous vide.

14. Procédé selon l'une des revendications précédentes **caractérisé en ce que** la couche d'électrolyte solide comprend de l'oxyde de zirconium, et en particulier **en ce que** de l'hydrure de zirconium est utilisé pour la formation des particules métalliques.

15. Procédé selon l'une des revendications précédentes **caractérisé en ce que** la couche d'électrolyte solide est une couche céramique.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004054982 A1
- DE 102005045053 A1
- DE 10302122 A1
- DE 112006000220 T5
- US 2003175439 A
- EP 1253213 A
- WO 0219455 A